(19) Europäisches Patentamt / European Patent Office / Office européen des brevets

(11) **EP 4 545 907 A1**

(12) **EUROPEAN PATENT APPLICATION**

(43) Date of publication:
**30.04.2025 Bulletin 2025/18**

(21) Application number: **23206365.1**

(22) Date of filing: **27.10.2023**

(51) International Patent Classification (IPC):
**G01C 13/00** (2006.01)    **G06F 16/29** (2019.01)

(52) Cooperative Patent Classification (CPC):
**G01C 13/006; G01C 13/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Iceye Oy**
**02150 Espoo (FI)**

(72) Inventors:
• **Zhang, Qiaoping**
  **02150 Espoo (FI)**
• **Luft, Harrison**
  **02150 Espoo (FI)**
• **Khadka, Ambika**
  **02150 Espoo (FI)**

(74) Representative: **Dentons UK and Middle East LLP**
**One Fleet Place**
**London EC4M 7WS (GB)**

(54) **FLOOD EXTENT MAPPING AND PREDICTION**

(57)    Flood extent mapping and prediction methods and systems are disclosed. A computer-implemented flood extent mapping and prediction method comprises: obtaining elevation data associated with a waterway and defining a line through the waterway in an upstream to downstream direction; obtaining water gauge data comprising one or more locations of one or more water gauges along the waterway, respectively, and water level data at each of the one or more water gauges; correlating the one or more water gauges to one or more respective points along the line through the waterway based on the one or more locations; determining a water depth value at each of the one or more respective points using the water level data from correlated water gauges and the elevation data; and generating a flood map based on the water depth value at each of the one or more respective points along the line through the waterway.

*FIG. 1*

**Description**

<u>TECHNICAL FIELD</u>

The present disclosure relates to flood extent mapping, and in particular to rapidly and accurately estimating an extent of a flooding event.

<u>BACKGROUND</u>

There are many stakeholders (residents, governments, first responders, search and rescue, insurance companies, etc.) attentive to natural catastrophes. For flooding events, the extent of flooding, and a peak of the flood (time and water depth), are often of particular interest, but can be difficult to determine in an accurate and timely manner given the dynamic and sometimes unpredictable nature of flood events.

Accordingly, additional, alternative, and/or improved systems and methods that enable flood extent mapping and prediction remains highly desirable.

<u>SUMMARY</u>

According to a first aspect of the disclosure, there is provided a computer-implemented flood extent mapping and prediction method, comprising: obtaining elevation data associated with a waterway and defining a line through the waterway in an upstream to downstream direction; obtaining water gauge data comprising one or more locations of one or more water gauges along the waterway, respectively, and water level data at each of the one or more water gauges; correlating the one or more water gauges to one or more respective points along the line through the waterway based on the one or more locations; determining a water depth value at each of the one or more respective points using the water level data from correlated water gauges and the elevation data; and generating a flood map associated with the waterway based on the water depth value at each of the one or more respective points along the line through the waterway.

In some aspects of the method, generating the flood map comprises outputting water depth values associated with the waterway and surrounding terrain. In some aspects of the method, generating the flood map comprises outputting a geographic representation of the waterway and surrounding terrain with associated water depth values.

In some aspects of the method, generating the flood map comprises: interpolating water depth values at points along the line through the waterway between two adjacent points for which the water depth value was determined using water level data from the correlated water gauges.

In some aspects of the method, generating the flood map further comprises: calculating water depth values in a cross-waterway direction at predefined distances from the points along the line through the waterway, the predefined distances including points in both the waterway and surrounding terrain.

In some aspects of the method, calculating the water depth values in the cross-waterway direction comprises: calculating a water level at the points along the line through the waterway using the water depth values and the elevation data; and calculating the water depth values in the cross-waterway direction at the predefined distances using the water level calculated at the points along the line through the waterway and the elevation data.

In some aspects of the method, calculating the water depth values in the cross-waterway direction at the predefined distances comprises determining a water level at the predefined distances in the cross-waterway direction from the water level at the points along the line through the waterway.

In some aspects, the method further comprises determining a water level at points along a centerline through the waterway, and wherein calculating the water depth values in the cross-waterway direction at the predefined distances comprises calculating a water level at distances in the cross-waterway direction from the centerline.

In some aspects of the method, the water level in the cross-waterway direction is set equal to the water level calculated at the points along the line through the waterway.

In some aspects of the method, the water level in the cross-waterway direction gradually decreases away from the water level calculated at points along a centerline through the waterway.

In some aspects of the method, a negative water depth value at a point in the cross-waterway direction indicates no flooding at the point.

In some aspects of the method, the elevation data associated with the waterway comprises levee elevation data used for calculating the water depth values in the cross-waterway direction.

In some aspects of the method, defining the line through the waterway comprises densifying points along the line.

In some aspects of the method, defining the line through the waterway comprises applying water flow enforcement that requires elevations of the points along the line through the waterway to decrease in a downstream direction.

In some aspects of the method, the line through the waterway is a centerline of the waterway.

In some aspects of the method, the water level data at each of the one or more water gauges is received in real-time or is forecasted water level data.

In some aspects of the method, the water level data at each of the one or more water gauges is forecasted water level data, and the method further comprises determining a peak forecasted water depth and associated time from the generated flood map.

In some aspects, the method further comprises tasking a satellite to image an area of the waterway based on the flood map.

In some aspects of the method, the satellite is tasked to image the area of the waterway at the associated time of the peak forecasted water depth

In some aspects of the method, tasking the satellite to image the area of the waterway further comprises specifying one or more of: a size of the image, a resolution of the image, and an imaging mode of the satellite

In some aspects, the method further comprises positioning the satellite to image the area of the waterway at the associated time of the peak forecasted water depth

According to a second aspect of the disclosure, there is provided a flood extent mapping and prediction system, comprising: a database storing elevation data associated with a waterway, data defining a line through the waterway in an upstream to downstream direction, and water gauge data comprising a location of one or more water gauges along the waterway and water level data at each of the one or more water gauges; a processor; and a non-transitory computer-readable medium having stored thereon computer program code that is executable by the processor and that, when executed by the processor, causes the system to perform the flood extent mapping and prediction method of any one of the above aspects.

In some aspects, the system further comprises a communication interface, and wherein the processor is configured to communicate data based on the generated flood map to an external device.

In some aspects of the system, the processor is configured to task a satellite to image an area of the waterway based on the generated flood map;

In some aspects, the system further comprises the satellite.

This summary does not necessarily describe the entire scope of all aspects. Other aspects, features and advantages will be apparent to those of ordinary skill in the art upon review of the following description of specific embodiments.

## BRIEF DESCRIPTION OF THE DRAWINGS

Further features and advantages of the present disclosure will become apparent from the following detailed description, taken in combination with the appended drawings, in which:

FIG. 1 depicts a representation of a flood extent mapping and prediction system;

FIG. 2 depicts a flood extent mapping and prediction method;

FIG. 3 depicts a method of generating the flood map in accordance with some embodiments;

FIG. 4 depicts an example flow diagram for automated selection of a waterway on which to perform the flood extent mapping and prediction method;

FIGs. 5A to 5C depict an example flow diagram performed by the flood extent mapping system;

FIG. 6 depicts an example map of a waterway and shows the centerline of the waterway;

FIG. 7 depicts a graph showing the effects of water flow enforcement on a line through the waterway; and

FIG. 8 depicts an example of a flood map generated for the waterway.

It will be noted that throughout the appended drawings, like features are identified by like reference numerals.

## DETAILED DESCRIPTION

The present disclosure provides flood extent mapping and prediction systems and methods that are capable of rapidly and accurately generating a flood map associated with a given waterway, such as a river, creek, stream, tributary, and/or network of waterways. The flood map provides water depth values along a waterway and surrounding terrain, and thus allows for determining an extent of a flooding event and inundation mapping. The flood extent mapping and prediction systems and methods may be executed using real-time data to allow for quickly ascertaining the flood extent and associated losses, or using forecasted data to make predictions and to provide a flood early warning system. Further, in particular embodiments using forecasted flood data, the generated flood map allows for determining a peak forecasted water depth and an associated time of peak flood from the generated flood map. Accordingly, the generated flood map can provide residents, local governments, disaster response officials, search and rescue teams, and many others with more accurate predictions of what areas will be flooded, when they will be flooded, and what will be the water depth in these areas. Such information can help improve the response of all these parties to a major food event, and can help to save lives and property, for example by more accurately identifying areas that need to be evacuated and when they need to be evacuated by. In another example, a satellite can be appropriately tasked to image an area of the waterway during the course of the flood and at important points during the flood, for example at the associated time of the peak forecasted water depth to capture the extent of the damage and to provide further and more accurate information into the extent of the flood.

Existing techniques to forecast flooding rely upon using complex hydrological models that require large amounts of input data and take several hours to days to compute. Accordingly, existing techniques to estimate flooding are slow, and are generally only performed for a small area/region. Moreover, these existing models are subject to uncertainty due to errors in input data (which generally has a coarse resolution and large uncertainty, such as for rainfall data), errors from previous calibrations of the model, etc. Not only is the use of complex hydrological models expensive and resource-intensive, they can also be inaccurate, making them less than ideal for disaster management response, potentially in a worst-case situation even leading to loss of life. It is also impractical to use these methods for tasking earth observation resources, such as a satellite, to image an area at peak flooding given the time to run the models and that peak flooding only lasts for approximately 2 to 6 hours. Running the complex models earlier to provide enough time to execute the model and to task a satellite is not practical because then the predictions are based on forecasted input data (e.g. precipitation models, rainfall runoff models, etc.) that is more inaccurate and subject to larger variation the further it is away from the actual time of the event that is being predicted.

On the other hand, the flood extent mapping and prediction method of the present disclosure requires a smaller amount of input data, as described below, and can be rapidly executed to generate a flood map. The flood extent mapping and prediction method can thus be executed using forecasted input data much closer to the time of peak flooding (e.g. using input data that is forecasted from no more than 24 hours out). Moreover, the input data in the flood extent mapping and prediction method comprises water gauge data, which is tied to a specific location. Accordingly, the forecasted input data is more accurate and localized, and correspondingly the generated flood map is more accurate. Meanwhile, the flood map is generated quickly and still allows ample time to warn residents and officials of an impending flood and/or to task a satellite to image a given area at a desired time such as peak flooding.

Further, because the flood extent mapping and prediction method is computationally inexpensive, the flood extent mapping and prediction is scalable and the flood map can be generated for a large area of the waterway and surrounding terrain without a significant increase in computing resources, unlike the case of using a complex hydrological model. The flood extent mapping and prediction system in accordance with the present disclosure thus provides a computationally resource efficient system to generate a flood map.

In accordance with the present disclosure, flood extent mapping and prediction methods and systems are disclosed. A computer-implemented flood extent mapping and prediction method comprises: obtaining elevation data associated with a waterway and defining a line through the waterway in an upstream to downstream direction; obtaining water gauge data comprising one or more locations of one or more water gauges along the waterway, respectively, and water level data at each of the one or more water gauges; correlating the one or more water gauges to one or more respective points along the line through the waterway based on the one or more locations; determining a water depth value at each of the one or more respective points using the water level data from correlated water gauges and the elevation data; and generating a flood map associated with the waterway based on the water depth value at each of the one or more respective points along the line through the waterway. A flood extent mapping and prediction system comprises: a database storing elevation data associated with a waterway, data defining a line through the waterway in an upstream to downstream direction, and water gauge data comprising a location of one or more water gauges along the waterway and water level data at each of the one or more water gauges; a processor; and a non-transitory computer-readable medium having stored thereon computer program code that is executable by the processor and that, when executed by the processor, causes the system to perform the flood extent mapping and prediction method.

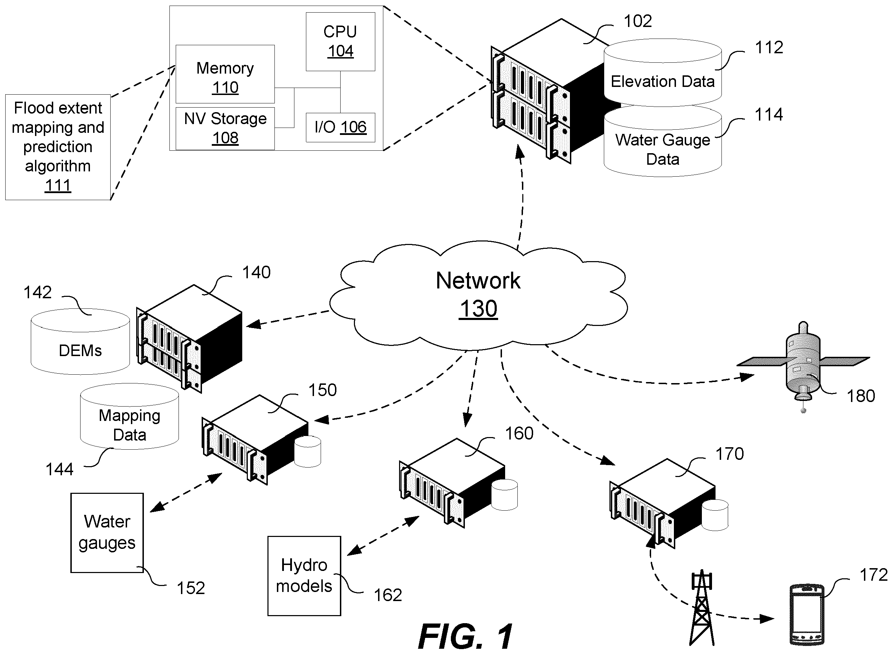

Embodiments are described below, by way of example only, with reference to Figures 1-8.

FIG. 1 depicts a representation of a flood extent mapping and prediction system. The system comprises one or more computing devices 102 (e.g. servers) configured to implement a flood extent mapping and prediction method. The computing devices 102 may be distributed (cloud-based). The computing devices 102 may comprise a plurality of computing devices configured to run in parallel for implementing the flood extent mapping and prediction method, as described in more detail herein.

The computing devices 102 have associated therewith one or more databases storing data used to execute the flood extent mapping and prediction method. As shown in FIG. 1, database 112 stores elevation data associated with a waterway and data defining a line through the waterway, which may be defined by points along the line (e.g. at specified distances) and associated locations and elevations. Database 114 stores water gauge data comprising a location of one or more water gauges along the waterway and water level data at each of the one or more water gauges. The data stored in databases 112 and 114 may be data that has been preprocessed by the computing devices 102 for use in performing the flood extent mapping and prediction method, as described in more detail herein.

As shown in FIG. 1, the computing devices 102 each comprise a processing unit (e.g. CPU 104), an input/output (I/O) interface 106, non-volatile storage 108, and a non-transitory computer-readable memory 110. The non-transitory computer-readable memory 110 comprises computer-executable instructions stored thereon at runtime which, when executed by the CPU 104, configure the computing device 102 to perform a flood extent mapping and prediction method 111 as described in more detail herein. The non-volatile storage 108 has stored on it computer-executable instructions that are loaded into the non-transitory computer-readable memory 110 at runtime. The input/output interface 106 comprises a communication interface that allows the computing device 102 to communicate with one or more external devices (e.g. via network 130, such as the Internet). The communication interface allows the computing devices 102 to receive input data that is used for performing the flood extent mapping and prediction method, and to communicate output data based on the generated flood map to external devices.

For example, the elevation data stored in database 112 may be obtained at least in part from data provided by one or more third party services operating servers 140, which may provide digital elevation models (DEMs) 142 (which may for example be digital terrain models (DTMs) and/or digital surface models (DSMs)) defining elevations for regions including and surrounding the waterway. Further, third party services may provide mapping data 144 for the waterway defining flow lines through the waterway, and optionally a centerline of the waterway. As described in more detail herein, elevations from the DEM are used in the flood extent mapping and prediction method. As an example, the DEM may be obtained from United States Geological Survey (USGS) 3DEP National Elevation Dataset, as provided in CFIM HDTM (Continental Flood Inundation Mapping HAND (Height Above Nearest Drainage) DTM), however it will be appreciated that other DEMs or combinations of DEMs may be used instead. In some instances, the original pixel size of DEMs may be high resolution, so the DEM may be downsampled (e.g. from 10m to 50m) to avoid potential memory issues and reduce computational load. A DEM may also be obtained to define levee elevation data along the waterway, which may be obtained as a separate dataset, e.g. by HUC2 (Hydrologic Unit Code classification level 2). Levees are man-made embankments built to prevent a river from overflowing. Further, the mapping data 144 may define one or more flow lines through a waterway, which can be used to perform the flood extent mapping and prediction method. As an example, the flow lines may be obtained from the DTM package, or from a National Hydrography Dataset (NHD) provided by the USGS, e.g. EPA NHDPlus National Data.

Water gauge data stored in database 114 may be obtained at least in part from one or more water gauge servers 150, which may provide real-time or near real-time water gauge data from a plurality of water gauges 152 along a waterway. Additionally or alternatively, the water gauge data stored in database 114 may be obtained at least in part from one or more model servers 160 that execute one or more hydrological models 162, which provides forecasted water gauge data. For example, the model servers 160 may be operated by the National Weather Service, which provides a 24-hour forecast of water levels at certain water gauges.

Based on a flood map generated by executing the flood extent mapping and prediction method 111, the one or more computing devices 102 may also communicate data to various external devices. For example, data based on the generated flood map, such as an amount of flooding in different areas along the waterway, may be communicated to government or first-responder servers 170, which may in turn be used to notify residents by pushing alerts to phones 172 of residents in the area. Additionally or alternatively, based on the generated flood map, the computing devices 102 may task a satellite 180 to image an area of and around the waterway. Tasking the satellite to image the area of the waterway may further comprise specifying one or more of: a size of the image, a resolution of the image, and an imaging mode of the satellite. In particular embodiments, the satellite may be tasked to image the area of the waterway at a location and time associated with a peak forecasted water depth, which may be of interest to insurance companies.

It will be appreciated that, as noted above, flood extent mapping is of interest to many stakeholders, and as such, the interactions between the computing devices 102 of the flood extent mapping and prediction system shown in FIG. 1 with external devices as described above are provided for the sake of example only and are non-limiting.

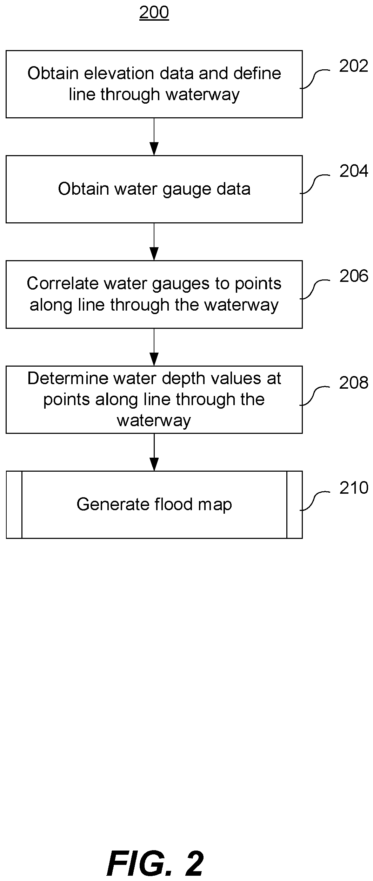

FIG. 2 depicts a flood extent mapping and prediction method 200. The flood extent mapping and prediction method 200 is a computer-implemented method and may be implemented at the one or more computing devices 102 in the flood extent mapping system as shown in FIG. 1.

The method 200 comprises obtaining elevation data associated with a waterway and defining a line through the waterway (202). The elevation data associated with the waterway is typically obtained for a section of the waterway and surrounding terrain (including levees), e.g. a water basin of varying sizes. In general, the method may be performed for any section of waterway and surrounding terrain that has an upstream and downstream gauge station, and/or that has an upstream gauge station or downstream gauge station and that connects to another section of the waterway where water level/depth values can be calculated. For example, the method may be performed on a river between upstream and downstream gauge stations. The method may also be performed on a tributary that flows into the river, between an upstream gauge station and where the tributary connects to the river. As described above, the elevation data may be obtained from DEM models or datasets. Multiple DEM models or datasets may be used to obtain the elevation data, such as using one model for the waterway elevations, and another model for the levee elevations.

The line through the waterway may be obtained from datasets, e.g. from DEM model datasets or a separate dataset that defines flow lines through a waterway. In other embodiments, the line through the waterway may be independently defined (i.e. not obtained from an external dataset). The line through the waterway is defined in an upstream to downstream direction. In some embodiments, the line through the waterway may be selected as a centerline of the waterway. However, a line off-center through the waterway could also be used, provided that the line is located inside the waterway, the line is continuous through the waterway (i.e. not discrete, isolated lines), and the main waterway is represented (i.e. no missing lines in the waterway). The line may be curved, zig-zagged, or generally following the centreline of the waterway but off-center, but regardless should overall be in a direction from upstream to downstream (i.e. with a first point of the line being upstream and an end point of the line being downstream) and have a component parallel to the direction of flow of the water.

The method 200 also comprises obtaining water gauge data (204). The water gauge data comprises data defining a location of one or more water gauges along the waterway and water level data at each of the one or more water gauges. As described above, the water gauge data may comprise water level data at each water gauge received in real-time or near real-time. Alternatively, the water gauge data may comprise forecasted water level data, ideally over a near-term time window such as a 24-hour forecast to improve the accuracy of the flood extent mapping and prediction method.

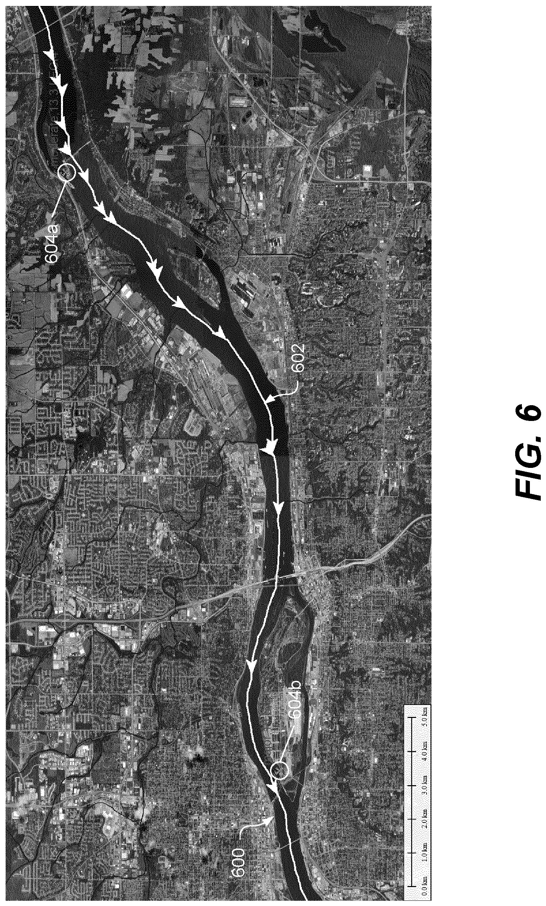

FIG. 6 depicts an example map of a waterway and shows the centerline of the waterway. The example map shown in FIG. 6 represents a visual depiction with a geographic representation of waterway data and water gauge data obtained for a waterway 600, and shows a centerline 602 of the waterway 600, and water gauge stations 604a and 604b located along the waterway 600. The water gauges in this example are labelled with associated information that may be provided by the third party service, such as a gauge status, a current water level, a water level forecast, and a station identifier. For water gauge station 604a, the associated data could indicate, for example, moderate forecasted flooding with a water level forecast of 13.3 feet. For water gauge station 604b, the associated data could indicate, for example, major forecasted flooding with a water level forecast of 18.6 feet.

Referring again to the method 200 shown in FIG. 2, obtaining the elevation data and the water gauge data (202 and 204) may further comprise preconditioning the data. That is, the data obtained from the water gauge stations and/or third party services may be pre-processed before storage in the databases 112 and 114 of FIG. 1 for use in executing the flood extent mapping and prediction method 200. For example, gauge station water level values may be obtained as absolute water level values or relative water level values. Relative water level values in gauge data have to be converted into absolute water level values. Further, points along the line through the waterway providing the basis for performing the flood extent mapping and prediction method may be densified. For example, a line through the waterway may be selected as a flow line obtained from a third party service that has a certain resolution. Points along the line may be densified (e.g. to define a point along the line every 50m) by interpolating between existing points defining the line to provide a higher resolution. An elevation at each point along the line can be obtained from the DEM model. Also, in embodiments of the present disclosure a water flow enforcement may be applied to the elevations of points along the line through the waterway, which requires the elevations of the points to decrease in a downstream direction. Since a water level at points along the line is calculated by adding water depth values to an elevation at the point, as described below, applying water flow enforcement to the elevations of the points along the line through the waterway ensures that the water level at the surface decreases in a downstream direction. The water flow enforcement may also be applied to ensure that an elevation of different channels (e.g. a tributary flowing into a river, a braided river, etc.) in the case of a water network have a same elevation at a point where the different channels meet.

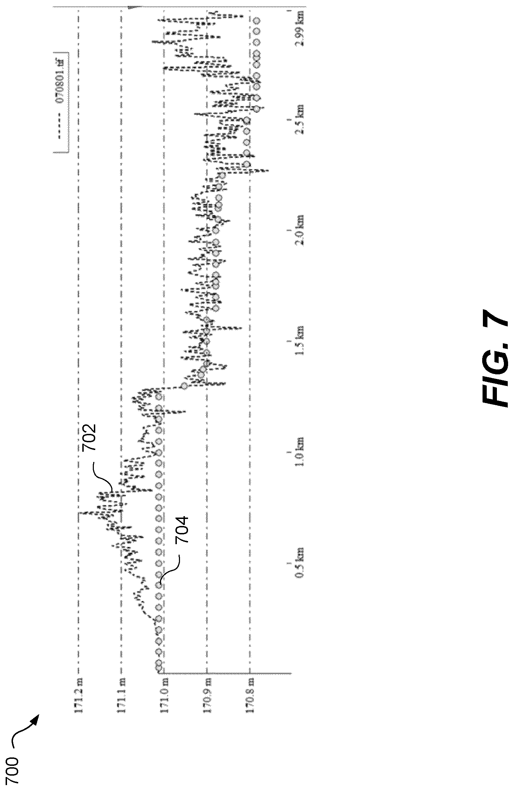

FIG. 7 depicts a graph 700 showing the effects of water flow enforcement on a line through the waterway. As described above, water flow enforcement is applied to ensure that elevations of the points along the line decrease in a downstream direction. In the graph 700, the line 702 represents elevations obtained from the elevation data, and the dots 704 represent elevations of points along the line through the waterway after water flow enforcement has been applied. The water flow enforcement can be achieved by adjusting the elevation of points along the waterway by using the following steps:

- (1) Define a line through the waterway with an Arc-Node structure. The line through the waterway may for example be a flow line received in a dataset from a third party service, or may be independently drawn through the waterway, as described above. Two points (e.g. endpoints) along the line are considered as nodes, and the line between the two nodes is the arc (or could be a straight line).

- (2) Node elevation adjustment

    o The elevation of the nodes are adjusted if necessary so that the upstream node elevation is higher than the downstream node elevation.

- (3) Inner point elevation adjustment

    o Using the elevations of the two nodes, an elevation of points along the line between the two nodes (which may have been densified, as described above) is adjusted as necessary to ensure that the elevation is not increasing, and to ensure that no point has an elevation lower than the elevation of the downstream node.

Referring again to FIG. 2, the method 200 comprises correlating the one or more water gauges to one or more respective points along the line through the waterway (206). That is, each of the one or more water gauges in the water gauge data is correlated to a nearest point along the line through the waterway based on the water gauge location. As seen in FIG. 6, the water gauges 604a and 604b are each located at a side of the waterway 600, and for the flood extent mapping and prediction method each water gauge is correlated to a point along the line for the purposes of subsequent calculation. Here, water gauge 604a is correlated to a point along the line 602 at an upstream location, and water gauge 604b is correlated to a point along the line 602 at a downstream location. It will be appreciated that by densifying points along the line through the waterway as described in the preprocessing above, a distance between a water gauge station and a nearest point along the line is reduced. Further, the method may impose a requirement that a given water gauge station located within a waterway must be matched to a point along the line through that waterway. For example, as seen in FIG. 6, the waterway 600 comprises a braided river section near the water gauge 604b. The flood extent mapping and prediction method may also be used to determine water depth values along a line through the secondary channel of the braded river section (as described below), but the water gauge 604b should not be correlated to a point along the line through that secondary channel.

The method 200 comprises determining a water depth value at each of the one or more respective points correlated with a water gauge (208). Determining the water depth value at the respective points is determined using the water level data from correlated water gauges and the elevations at those points from the elevation data (where the elevations may have also been preprocessed as described above to apply water flow enforcement). The water depth value at the respective points correlated with a water gauge can be determined using the following equation:

$$\text{Water Depth Value (at Point)} = \text{Water Level Value (at correlated Water Gauge)} - \text{Elevation (at Point)}$$

Thus, as seen in the equation above, the water level at the correlated water gauge is considered to be the water level value at the point along the line. It will be appreciated that this approximation may not be perfect (e.g. where the water gauge is located at an edge of the waterway and the point on the line through the waterway is located closer toward the center, particularly for large/wide waterways), however for the purposes of the flood extent mapping and prediction method provides a satisfactory result that allows for quickly and accurately determining water depth values without the use of complex hydrological models. It will also be appreciated that some minor corrections could be applied to the water level values based on calibrations to actual flood events, or to take into account the fact that the water level may decrease slightly from a center of the waterway towards the sides of the waterway. The water level profile in a cross-waterway direction could be expressed as a function of one or more of: the distance away from the center of the waterway, the Return Time Period (RTP in years) that is being considered (or the flood severity level), the Strahler order of the waterway section, and the estimated accumulation area of the river section. Coefficients could be adjusted/calibrated using some observations so that the resultant flood extent is in alignment with what has been observed historically. Accordingly, a correction factor could be applied to the water level value at the correlated water gauge to approximate the water level at the point along the line through the waterway. That is, the water level profile in the cross-waterway direction may be considered as a downward curve from the waterway center, and the rate of decreasing could be adjusted based on reference data, i.e. by setting a different rate for different flood severity level (or RTP) and/or for different river size (Strahler order/accumulation area).

Irrespectively of any minor differences in the water level at a gauge station and a water level at a correlated point along the line through the waterway, the water level data at a gauge station is localized, and thus provides a better estimation of a water level at a correlated point along the line through the waterway than a value calculated from a complex hydrological model, which relies upon input data having coarse resolution for an area (e.g. rainfall data) and is subject to significant uncertainties.

A flood map is generated (210) based on the water depth value at each of the one or more respective points along the line through the waterway. That is, using the water depth values at the correlated points of the line calculated above, a flood map is generated for the waterway and surrounding terrain. In some embodiments, generating the flood map comprises outputting water depth values associated with the waterway and surrounding terrain. It will be appreciated that being able to generate these water depth values can inform stakeholders of potential flooding areas, and/or inform researchers of areas to focus further flood analysis on. Additionally or alternatively, the generated flood map may comprise outputting a visual representation of water depth values, such as outputting a geographic representation of the waterway and surrounding terrain with associated water depth values.

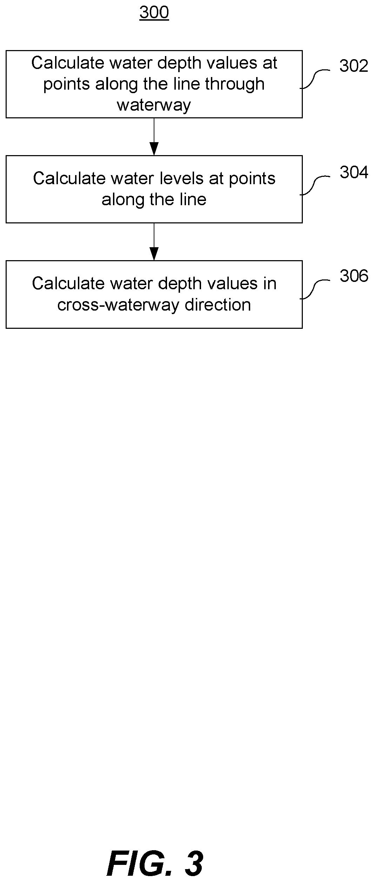

FIG. 3 depicts a method 300 of generating the flood map in accordance with some embodiments. With the flood map generated by the method 300, water depth values are calculated at each point along the line through the waterway, as well as at points at distances in a cross-waterway direction from the line, so that water depth values along the waterway and surrounding areas are calculated and output.

The method 300 comprises calculating water depth values at the points along the line through the waterway (302). Calculating the water depth values at the points along the line through the waterway may be performed by interpolating water depth values at points along the line through the waterway between two adjacent points for which the water depth value was determined using water level data from the correlated water gauges. For example, a distance-weighted average water depth value may be calculated at each point along the line between points for which the water depth value was determined using water level data from the correlated water gauges. In a network of waterways, water depth values can also be calculated along lines through secondary channels by interpolating water depth values at points along a line through the secondary channel between a point correlated to a water gauge and a point on the main waterway channel that the secondary channel connects to.

The method 300 further comprises calculating water depth values in a cross-waterway direction at predefined distances from the points along the line through the waterway. The predefined distances in the cross-waterway direction are defined to encompass both points in the waterway and points in the surrounding terrain. To calculate water depth values in a cross-waterway direction, the method 300 comprises calculating a water level at the points along the line through the waterway (304). Calculating the water level at the points along the line may be calculated from the following equation using the water depth values and the evaluation values from the digital terrain model:

$$\text{Water Level (at Point)} = \text{Water Depth (at Point)} + \text{Elevation (at Point)}$$

Using the water levels at the points along the line through the waterway, water depth values in a cross-waterway direction are calculated (306) at pre-defined distances (e.g. every 50 meters, up to 5,000 meters) in either direction away from the line (i.e. perpendicular to the line, at a respective point, in the cross-waterway direction). The water depth values may be calculated using the following equation:

$$\text{Water Depth (at cross-waterway point)} = \text{Water Value (at cross-waterway point)} -$$

$$\text{Elevation (at cross-waterway point)}$$

The water value at a given point in the cross-waterway direction may be set equal to the water value at the corresponding point along the line through the waterway. Alternatively, a correction may be applied so that the water level at distances further from the centerline of the waterway gradually decreases, as described above. In some embodiments, if the line through the waterway is not a centerline through the waterway, the water level at points along the centerline may be determined, and the water depth values in a cross-waterway direction be calculated at distances from the centerline.

The flood map may be generated for the waterway and surrounding terrain using the water depth values calculated at each point along the line through the waterway and in the cross-waterway direction. Advantageously, as described above, the flood extent mapping and prediction method 200 including the method 300 of generating a flood map allows for quickly calculating water depth values along the waterway in a 2D flood map from point data (i.e. the water level at gauge stations), and is thus highly scalable compared to using complex hydrological models which take a long time to execute and are thus localized.

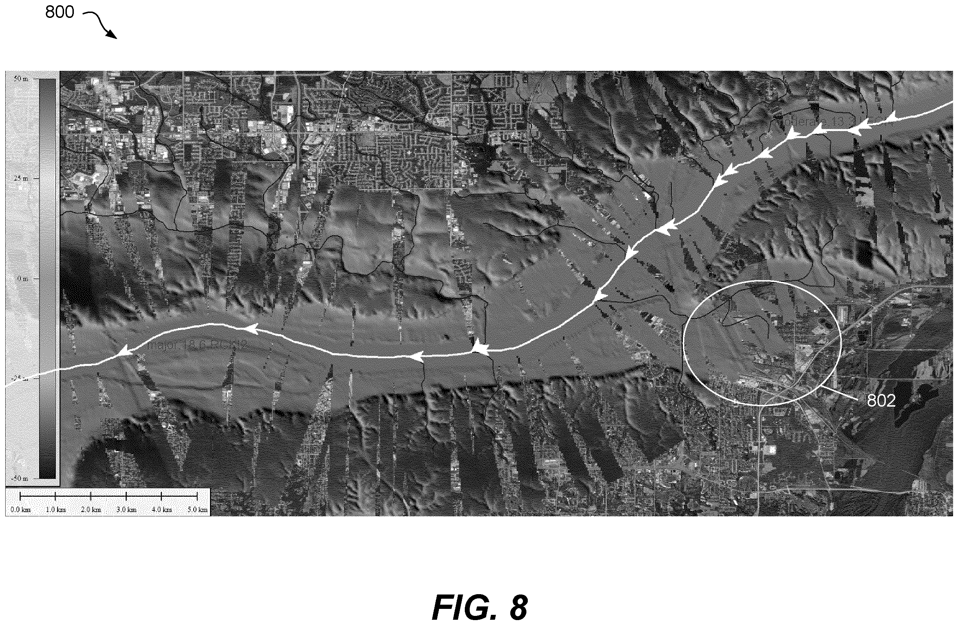

FIG. 8 depicts an example of a flood map 800 generated for the waterway. The flood map 800 in this example shows water depths over a given area, although it will be appreciated that additional or alternative information may be shown on a generated flood map. With concurrent reference to the map of the same waterway shown in FIG. 6 without water depth values, it can be seen on the flood map 800 that the water depth values along the waterway are positive and extend in a cross-waterway direction past the levees and onto the surrounding terrain. It can also be seen that an area 802 has positive water depth values indicative of flooding. Other areas have negative water depth values and hence no flooding.

The rectangular shapes of water depth values shown on the generated flood map is a result of the water depth value calculations performed in a cross-waterway direction based on the water depth values at the line through the waterway (which in this example is a centerline). Accordingly, at further distances in the cross-waterway direction from the line through the waterway, there may be some areas without a water depth value calculated. To fill in these gaps, further densification of points along the line through the waterway may be performed, however the additional calculation time associated with these additional points may be considered. On the other hand, some points in the cross-waterway direction may have multiple water depth values calculated at that point (e.g. because the points along the line through the waterway curve and result in an overlap). Various statistical techniques may be performed to provide the water depth value at such a point, including mean, median, etc. Alternatively, for a conservative approach the highest water depth value at that point may be selected.

Various other post-processing may be applied to the generated flood map. Another example of post-processing is that a water depth value calculated based on the above-described method may be negative in an area of high elevation, but further away from the waterway, behind the area of high elevation, may be positive. However in this scenario, since the flooding would be prevented by the area of high elevation, there would be no flooding behind the area of high elevation despite the method outputting a positive water depth value. On the other hand, there may be a tributary flowing into the waterway behind the area of high elevation, which may allow for the correct conclusion of flooding in that area (as is the case for the area 802 in FIG. 8).

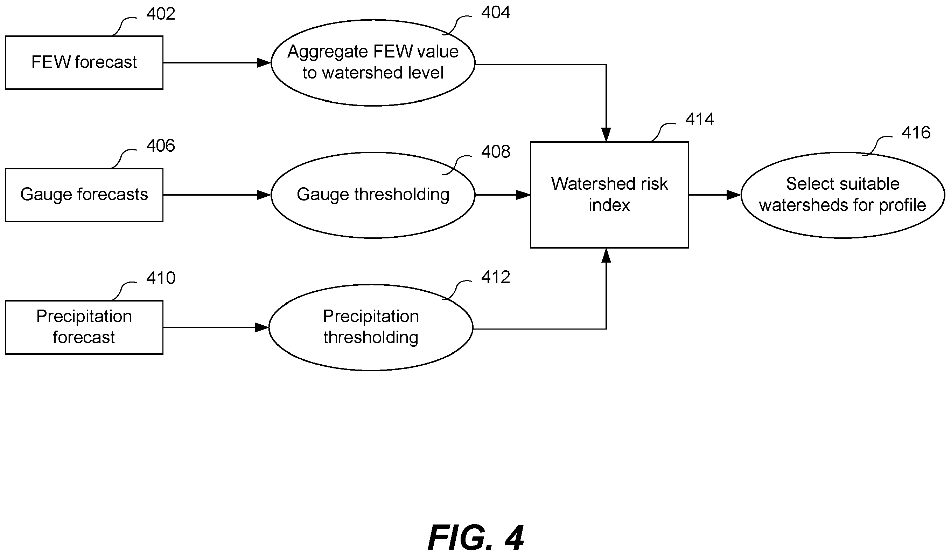

FIG. 4 depicts an example flow diagram for automated selection of a waterway on which to perform the flood extent mapping and prediction method. While the present flood extent mapping and prediction systems and methods may be performed for a waterway or region of a waterway that is manually selected, it may be particularly advantageous to automatically identify and select waterways at risk of experiencing flooding, thus further automating the flood extent mapping and prediction. As seen in FIG. 4, the automated selection of a waterway on which to perform the flood extent mapping and prediction method may be based on a watershed risk index for an upcoming flood event.

To determine a watershed risk index, a flood early warning (FEW) forecast may be determined (402) and FEW values are aggregated to watershed level (404). FEW values may be obtained that have been calculated for certain grids (e.g. 500m by 500m). The FEW values may be an index indicative of a probability of flooding in that grid. FEW values calculated for grids associated with a waterway may be evaluated to determine a highest FEW value associated with the waterway. If the maximum FEW value exceeds a threshold value, e.g. greater than 50 on a scale of 0 to 100, then it may be determined that the waterway and surrounding terrain is at risk of flooding.

Also, water gauge forecasts may be determined (406) based on available water gauge forecasts for various waterways. The water gauge forecasts are compared to thresholds (408). Water gauge forecasts may define not only a forecast water level at the water gauge, but may also be associated with a warning level (e.g. moderate flooding, major flooding, etc.). Water gauge data that is tagged with a warning level may be used to readily identify high-risk watersheds by identifying water gauges that are forecasting moderate or major flooding. If there is no warning level associated with a water gauge forecast, a threshold percentage of water level increase above normal may be used as the water gauge threshold.

A precipitation forecast may also be determined (410) and likewise compared to threshold values (412). The precipitation threshold values may for example define a certain amount of rainfall in a given amount of time.

The comparison of FEW, gauge, and precipitation forecasts to thresholds are used to determine a watershed risk index (414). Based on the watershed risk index, those waterways with a highest risk of flooding, or an index above a pre-defined value, may be automatically selected for profiling with the flood extent mapping and prediction method (416).

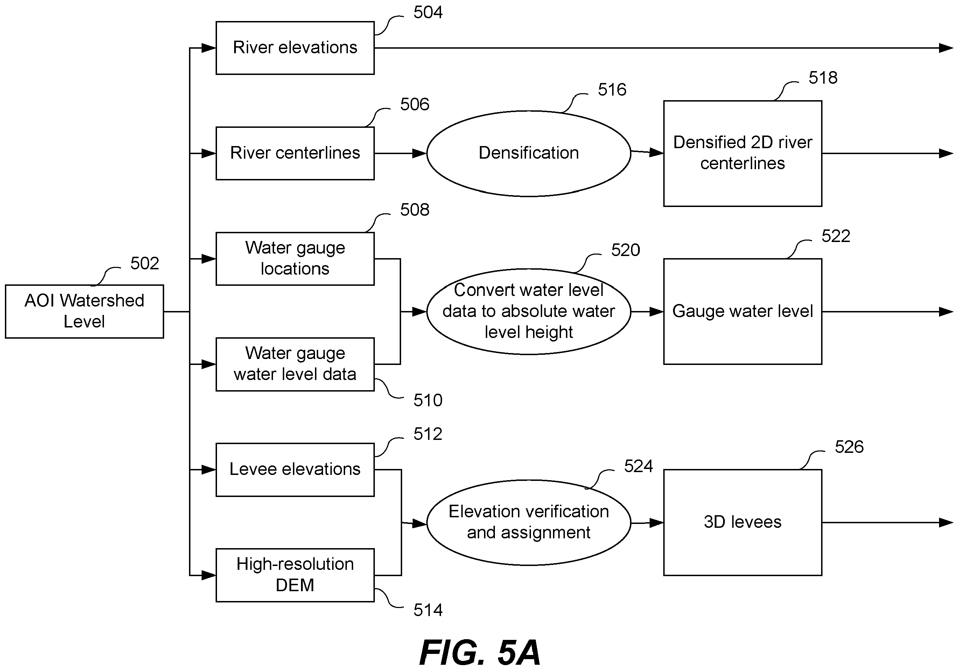

FIGs. 5A to 5C depict an example flow diagram performed by the flood extent mapping system. In some embodiments, the flow diagram may be automatically performed in response to the automated selection of a waterway and surrounding terrain for profiling described with reference to FIG. 4. In other embodiments, the flow diagram may be performed on a manually-selected waterway and surrounding terrain.

With reference to FIG. 5A, in this example flow diagram the waterway is a river and the line through the waterway is a river centerline. For a watershed deemed an area of interest (502), the following input data is obtained: river elevations (504), river centerlines (506), water gauge locations along the river (508), water gauge water level data (510), which may be forecasted water level data or real-time water level data, levee data including levee elevations (512), and a high-quality high-resolution DEM (e.g., LiDAR-derived) (514).

The river centerlines undergo densification (516) to produce densified 2D river centerlines (518). As described above, the densification increases the number of points along the river centerline and hence the resolution of the river centerline.

The water gauge data is processed to convert water level data for respective water gauges to an absolute water level height (520) to obtain a gauge water level (522) at each respective water gauge. That is, water gauge data is often in a relative sense with its own zero reference, so the water levels are converted to absolute height so they are with the same zero reference as the river elevation data.

The levee elevations are compared with the high-resolution DEM to perform elevation verification and assignment (524). The levee elevation and verification assignment ensures: 1) that there is elevation information for a given levee line; and 2) that the elevation represents the top of the levee. There are cases where a levee line has missing elevation data or an incorrect elevation value (e.g., all zeros, or in feet instead of meters). The DEM verifies the levee elevations and re-assigns the elevation if missing or incorrect. This DEM may be different than the one being used for water depth calculation and/or for river centerlines. The levee lines are usually quite sparse and a DEM with a higher resolution may be used without any computational issues. The levee elevation verification and assignment obtains 3D levee data (526).

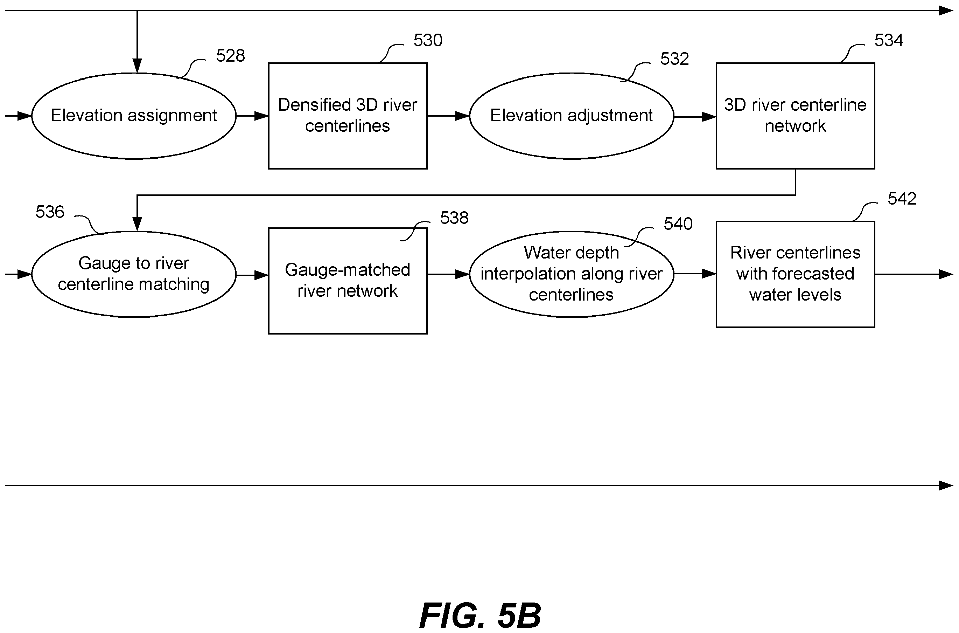

Referring to FIG. 5A and FIG. 5B, the river elevation data 504 is used to assign elevation data (528) to points along the densified 2D river centerlines 518, which provides densified 3D river centerlines (530). Elevation adjustment is performed (532), which comprises applying water flow enforcement as described above. A 3D river centerline network is generated (534), which comprises locations and elevations of river centerlines in the network.

The 3D river centerline network 534 is used to correlate water gauges to points along the river centerline (536), which provides a gauge-matched river network (538). The water depth values at the points correlated with a water gauge are determined from the water gauge water level data, and water depth interpolation is performed along the river centerlines (540). In this example the water gauge water level data is forecasted water level data and the river centerlines with forecasted water levels is obtained (542).

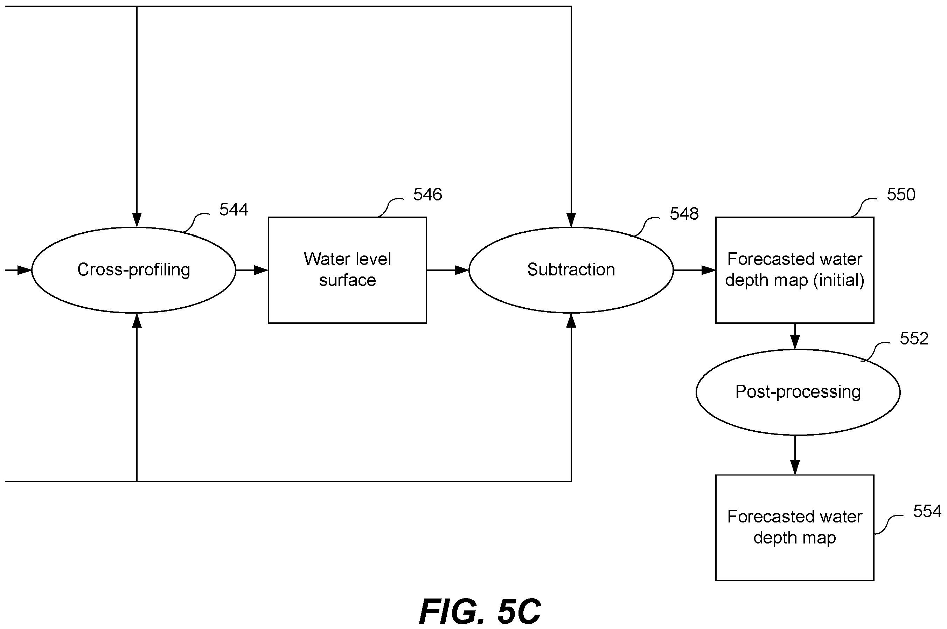

Referring to FIG. 5B and 5C, cross-profiling is performed (544) as has been described above, using the river elevation data, the river centerlines with forecasted water levels, and the 3D levee data. Water level surface data is obtained (546) from the cross-profiling and the river centerline data. Elevations of the river and surrounding terrain are subtracted (548) to obtain forecasted water depth values (550). A post-processing process is performed (552), as has been described above, to produce a final forecasted water depth map (554) such as the one shown in FIG. 8.

In an example, the flood estimation and prediction methods disclosed herein were used with historic gauge data to simulate predicting the number of buildings that would be impacted by a flood event on the Mississippi River. These predictions were then compared with estimates from a post-analysis performed following the actual flooding event. The post-analysis used satellite data of the actual flood event, social media postings, and other data to estimate the number of buildings affected by the flood after the event. The post-analysis estimate was produced over the course of several days after the event by multiple people working on the analysis. As the post-analysis was performed after the flooding event, it could not have been used to predict a flood extent, notwithstanding the substantial amount of time involved to perform the post-analysis. Note also that the post-analysis is itself also an estimate with its own sources of error and inaccuracies. In fact, the post-analysis methodology used in this case can tend to underestimate the number of buildings affected and as such does not represent "ground truth". However, ground truth flooding data is notoriously difficult to obtain, even after the fact, and in fact is often simply not available. As such, the post-analysis estimate can still be useful as a point of comparison for the flood estimation and prediction methods disclosed herein.

Table 1 below shows an estimate of the number of buildings affected by a flooding event that would have been predicted by the flood extent mapping and prediction method using water gauge forecasts taken from 24 hours ahead of the actual flood event, in accordance with the present disclosure, and an estimate of the number of buildings affected by the flooding event that were estimated by a post-analysis conducted *after* the flooding the event. Reference to edge effects means slight building corner touches (e.g., where flood water only touches a corner of a building), due to coarse-resolution cross-profiling that may overinflate the prediction of buildings affected by the flooding. Filtering (for example by requiring the depth of water at a building to be greater than zero) was applied to remove edge effects.

Table 1:

|  | DEM | Count of Buildings Affected | Count of Buildings Affected, no edge effects |
|---|---|---|---|
| Post Analysis | 10m, 1m, 3m | 4,338 | 2,479 |
| Method, 24 hour forecast, 10m, with levees | 10m | 6,577 | 4,044 |
| Method, 24 hour forecast, 50m, with levees | 10m, resampled to 50m | 7,190 | 4,544 |
| Method, 24 hour forecast, 50m, without levees | 10m, resampled to 50m | 19,272 | 15,329 |

As seen in Table 1 above, predictions were made using the flood extent mapping and prediction method in accordance with the present disclosure under three conditions: (1) 24 hour forecast water gauge data, using a 10m resolution DEM, and taking into consideration levee data; (2) 24 hour forecast water gauge data, using a 10m resolution DEM resampled to 50m, and taking into consideration levee data; and (3) 24 hour forecast water gauge data, using a 10m resolution DEM resampled to 50m, and not taking into consideration levee data. As described above, a higher resolution DEM may be down-sampled in accordance with the present disclosure to further reduce computation time.

Table 2 compares the estimates of the flood extent mapping and prediction method using data from 24 hours before the event in accordance with the present disclosure, against the post-analysis estimates. The ratio of the number of flooded buildings estimated by both methods is compared. The IoU (intersection over union), is also calculated to compare the two sets of data. The IoU is obtained by taking the number of buildings determined by both methods to be flooded (the intersection) and dividing by the total number of buildings estimated to be flooded by either method (the union).

Table 2:

| | Ratio of # building captured in forecast compared to post-analysis | Ratio of # building captured in forecast compared to post-analysis without edge effects | IoU (Buildings) with post-analysis | IoU (buildings) without edge effects |
|---|---|---|---|---|
| Method, 24-hour forecast, 10m, with levees | 6577 / 4338 = **1.51** | 4044 / 2479 = **1.63** | 3284 / (4338 + 6577 - 3284) = **0.43** | 1891 / (2479 + 4044 - 1891) = **0.40** |
| Method, 24-hour forecast, 50m, with levees | 7190 / 4338 = **1.65** | 4544 / 2479 = **1.83** | 3197 / (4338 + 7190 - 3197) = **0.38** | 1890 / (2479 + 4544 - 1890) = **0.36** |
| Method, 24-hour forecast, 50m, without levees | 19272 / 4338 = **4.44** | 15329/2479 = **6.18** | 3113 / (4338 + 19272 - 3113) = **0.15** | 2007 / (2479 + 15329 - 2007) = **0.12** |

The tables above show that the estimate of buildings flooded, as predicted by the flood extent mapping and prediction method disclosed herein and based on forecasted data taken from 24 hours before the event, are in general higher than the estimates from the post-analysis study, which was based on data taken during and after the flood. However, this example shows that the estimates are at similar and follow similar trends when edge effects are taken into account. The results are in fact quite close (same order of magnitude) for the examples according to the current disclosure when the levees are taken into account. Note that for flood early warning purposes, over-estimation is better compared to under-estimation.

It can also be seen from the tables above that down-sampling the DEM model to reduce the required computation time does affect the estimate somewhat, leading to a slightly higher estimate, but the difference is relatively small. The computation time for the flood extent mapping and prediction method in the above examples was only about 30 minutes with the DEM resampled to 50m. It will be appreciated that it is possible to use the regular DEM (not down sampled) with a slight increase in computation time. In any case, this example shows that the flood extent mapping and prediction method can provide a fast estimate of flood extent that can be performed using real-time water gauge data or forecasted water gauge data. In the above example, being able to predict the approximate extent of the flood 24 hours before the actual flood event using as little as 30 minutes of computational time could have given governments and authorities in this region of the Mississippi River a huge advantage in terms of deciding which areas to evacuate, potentially resulting in many saved lives and a much more effective response to the actual flood event.

One important note is that the accuracy of the flood extent mapping and prediction method in accordance with the present disclosure is affected by the accuracy of the forecast water gauge levels (obtained from third party services). Accordingly, if the forecast water gauge levels is inaccurate, the generated flood map in accordance with the present disclosure will also contain that inaccuracy.

Also, as mentioned previously, the post-analysis data is not ground truth because it is itself an estimate and can also contain inaccuracies. As such, the actual accuracy of the flood extent mapping and prediction method could well be better when compared to actual ground truth (if it were available) than what is suggested by comparing to the post-analysis estimate, especially if the post-event analysis does in fact under-estimate the number of buildings affected. In addition, the areas being compared by the two methods may not be exactly the same.

It will also be appreciated that predicting a number of buildings affected is simply one potential use of the flood map generated in accordance with the present disclosure. In fact, it is a particularly challenging application since buildings are relatively small and thus a high degree of spatial preciseness would be required, which would not be expected based on using data from only a relatively small number of water gauge measurements, especially if the data is forecast data from 24 hours before the actual event. Building estimates were chosen in the above example to illustrate the capability of the flood extent mapping and prediction method according to the present disclosure precisely because it is a difficult problem, and because the post-analysis estimates were available to compare against. It will be understood that the flood extent mapping and prediction method can be evaluated in many different ways aside from a count of buildings affected. For example, at a practical level knowing roughly whether an area is or will be flooded or not, and by approximately how much, using only a minimum of computation time, is already a significant improvement over the prior art.

The embodiments have been described above with reference to flow, sequence, and block diagrams of methods, apparatuses, systems, and computer program products. In this regard, the depicted flow, sequence, and block diagrams illustrate the architecture, functionality, and operation of implementations of various embodiments. For instance, each block of the flow and block diagrams and operation in the sequence diagrams may represent a module, segment, or portion of code, which comprises one or more executable instructions for implementing the specified action(s). In some alternative embodiments, the action(s) noted in that block or operation may occur out of the order noted in those figures. For example, two blocks or operations shown in succession may, in some embodiments, be executed substantially concurrently, or the blocks or operations may sometimes be executed in the reverse order, depending upon the functionality involved. Some specific examples of the foregoing have been noted above but those noted examples are not necessarily the only examples. Each block of the flow and block diagrams and operation of the sequence diagrams, and combinations of those blocks and operations, may be implemented by special purpose hardware-based systems that perform the specified functions or acts, or combinations of special purpose hardware and computer instructions.

The terminology used herein is for the purpose of describing particular embodiments only and is not intended to be limiting. Accordingly, as used herein, the singular forms "a", "an", and "the" are intended to include the plural forms as well, unless the context clearly indicates otherwise (e.g., a reference in the claims to "a challenge" or "the challenge" does not exclude embodiments in which multiple challenges are used). It will be further understood that the terms "comprises" and "comprising", when used in this specification, specify the presence of one or more stated features, integers, steps, operations, elements, and components, but do not preclude the presence or addition of one or more other features, integers, steps, operations, elements, components, and groups. Directional terms such as "top", "bottom", "upwards", "downwards", "vertically", and "laterally" are used in the following description for the purpose of providing relative reference only, and are not intended to suggest any limitations on how any article is to be positioned during use, or to be mounted in an assembly or relative to an environment. Additionally, the term "connect" and variants of it such as "connected", "connects", and "connecting" as used in this description are intended to include indirect and direct connections unless otherwise indicated. For example, if a first device is connected to a second device, that coupling may be through a direct connection or through an indirect connection via other devices and connections. Similarly, if the first device is communicatively connected to the second device, communication may be through a direct connection or through an indirect connection via other devices and connections.

Phrases such as "at least one of A, B, and C", "at least one of A, B, or C", "one or more of A, B, and C", and "A, B, and/or C" are intended to include both a single item from the enumerated list of items (i.e., only A, only B, or only C) and multiple items from the list (i.e., A and B, B and C, A and C, and A, B, and C). Accordingly, the phrases "at least one of", "one or more of", and similar phrases when used in conjunction with a list are not meant to require that each item of the list be present, although each item of the list may be present.

It is contemplated that any part of any aspect or embodiment discussed in this specification can be implemented or combined with any part of any other aspect or embodiment discussed in this specification, so long as such those parts are not mutually exclusive with each other.

It is contemplated that any part of any aspect or embodiment discussed in this specification can be implemented or combined with any part of any other aspect or embodiment discussed in this specification.

The scope of the claims should not be limited by the embodiments set forth in the above examples, but should be given the broadest interpretation consistent with the description as a whole.

It should be recognized that features and aspects of the various examples provided above can be combined into further examples that also fall within the scope of the present disclosure. In addition, the figures are not to scale and may have size and shape exaggerated for illustrative purposes.

## Claims

1.   A computer-implemented flood extent mapping and prediction method, comprising:

   obtaining elevation data associated with a waterway and defining a line through the waterway in an upstream to downstream direction;
   obtaining water gauge data comprising one or more locations of one or more water gauges along the waterway, respectively, and water level data at each of the one or more water gauges;
   correlating the one or more water gauges to one or more respective points along the line through the waterway based on the one or more locations;
   determining a water depth value at each of the one or more respective points using the water level data from correlated water gauges and the elevation data; and
   generating a flood map associated with the waterway based on the water depth value at each of the one or more respective points along the line through the waterway.

2.   The computer-implemented flood extent mapping and prediction method of claim 1, wherein generating the flood map comprises:

interpolating water depth values at points along the line through the waterway between two adjacent points for which the water depth value was determined using water level data from the correlated water gauges.

3. The computer-implemented flood extent mapping and prediction method of claim 2, wherein generating the flood map further comprises:
calculating water depth values in a cross-waterway direction at predefined distances from the points along the line through the waterway, the predefined distances including points in both the waterway and surrounding terrain.

4. The computer-implemented flood extent mapping and prediction method of claim 3, wherein calculating the water depth values in the cross-waterway direction comprises:

calculating a water level at the points along the line through the waterway using the water depth values and the elevation data; and
calculating the water depth values in the cross-waterway direction at the predefined distances using the water level calculated at the points along the line through the waterway and the elevation data.

5. The computer-implemented flood extent mapping and prediction method of claim 4, wherein calculating the water depth values in the cross-waterway direction at the predefined distances comprises determining a water level at the predefined distances in the cross-waterway direction from the water level at the points along the line through the waterway.

6. The computer-implemented flood extent mapping and prediction method of claim 4 or claim 5, wherein a negative water depth value at a point in the cross-waterway direction indicates no flooding at the point.

7. The computer-implemented flood extent mapping and prediction method of any one of claims 4 to 6, wherein the elevation data associated with the waterway comprises levee elevation data used for calculating the water depth values in the cross-waterway direction.

8. The computer-implemented flood extent mapping and prediction method of any one of claims 1 to 7, wherein defining the line through the waterway comprises densifying points along the line.

9. The computer-implemented flood extent mapping and prediction method of any one of claims 1 to 8, wherein defining the line through the waterway comprises applying water flow enforcement that requires elevations of the points along the line through the waterway to decrease in a downstream direction.

10. The computer-implemented flood extent mapping and prediction method of any one of claims 1 to 9, wherein the line through the waterway is a centerline of the waterway.

11. The computer-implemented flood extent mapping method of any one of claims 1 to 10, wherein the water level data at each of the one or more water gauges is received in real-time or is forecasted water level data.

12. The computer-implemented flood extent mapping method of claim 11, wherein the water level data at each of the one or more water gauges is forecasted water level data, and the method further comprises determining a peak forecasted water depth and associated time from the generated flood map.

13. The computer-implemented flood extent mapping method of claim 12, further comprising tasking a satellite to image an area of the waterway based on the flood map.

14. A flood extent mapping and prediction system, comprising:

a database storing elevation data associated with a waterway, data defining a line through the waterway in an upstream to downstream direction, and water gauge data comprising a location of one or more water gauges along the waterway and water level data at each of the one or more water gauges;
a processor; and
a non-transitory computer-readable medium having stored thereon computer program code that is executable by the processor and that, when executed by the processor, causes the system to perform the flood extent mapping and prediction method of any one of claims 1 to 13.

15. The flood extent mapping system of claim 14, further comprising a communication interface, and wherein the processor is configured to communicate data based on the generated flood map to an external device.

*FIG. 1*

EP 4 545 907 A1

200

```
┌─────────────────────────────┐
│  Obtain elevation data and define  │── 202
│      line through waterway      │
└─────────────────────────────┘
              │
              ▼
┌─────────────────────────────┐
│      Obtain water gauge data       │── 204
└─────────────────────────────┘
              │
              ▼
┌─────────────────────────────┐
│   Correlate water gauges to points   │── 206
│    along line through the waterway   │
└─────────────────────────────┘
              │
              ▼
┌─────────────────────────────┐
│   Determine water depth values at    │── 208
│    points along line through the     │
│            waterway             │
└─────────────────────────────┘
              │
              ▼
┌─────────────────────────────┐
│        Generate flood map         │── 210
└─────────────────────────────┘
```

# FIG. 2

300

```
┌─────────────────────────────┐
│ Calculate water depth values at │ ⟋ 302
│ points along the line through   │
│ waterway                        │
└─────────────────────────────┘
            │
            ▼
┌─────────────────────────────┐
│ Calculate water levels at points │ ⟋ 304
│ along the line                  │
└─────────────────────────────┘
            │
            ▼
┌─────────────────────────────┐
│ Calculate water depth values in  │ ⟋ 306
│ cross-waterway direction         │
└─────────────────────────────┘
```

# FIG. 3

*FIG. 4*

**FIG. 5A**

**528** Elevation assignment → **530** Densified 3D river centerlines → **532** Elevation adjustment → **534** 3D river centerline network

**536** Gauge to river centerline matching → **538** Gauge-matched river network → **540** Water depth interpolation along river centerlines → **542** River centerlines with forecasted water levels

*FIG. 5B*

EP 4 545 907 A1

*FIG. 5C*

*FIG. 6*

**FIG. 7**

EP 4 545 907 A1

**FIG. 8**

Europäisches
Patentamt

European
Patent Office

Office européen
des brevets

# EUROPEAN SEARCH REPORT

**Application Number**

EP 23 20 6365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CRISS ROBERT E ET AL: "Stage-based flood inundation mapping", NATURAL HAZARDS, SPRINGER NETHERLANDS, DORDRECHT, vol. 112, no. 3, 22 February 2022 (2022-02-22), pages 2385-2401, XP037879389, ISSN: 0921-030X, DOI: 10.1007/S11069-022-05270-6 [retrieved on 2022-02-22] * page 2388 – page 2390 * ----- | 1-6,8-15 | INV. G01C13/00 G06F16/29 |
| X | LI ZHOUYAYAN ET AL: "A comprehensive web-based system for flood inundation map generation and comparative analysis based on height above nearest drainage", SCIENCE OF THE TOTAL ENVIRONMENT, ELSEVIER, AMSTERDAM, NL, vol. 828, 9 March 2022 (2022-03-09), XP087048615, ISSN: 0048-9697, DOI: 10.1016/J.SCITOTENV.2022.154420 [retrieved on 2022-03-09] * abstract * * page 3 – page 6 * ----- | 1,7,11, 14 | |
| X | JP 4 323565 B1 (KIMIGAFUCHIGAKUEN SOJO UNIV) 2 September 2009 (2009-09-02) * paragraphs [0014], [0016], [0024], [0068] * ----- | 1,11,14 | |
| | -/-- | | |

TECHNICAL FIELDS SEARCHED (IPC)

G01C
G06F

The present search report has been drawn up for all claims

| Place of search | Date of completion of the search | Examiner |
|---|---|---|
| The Hague | 28 March 2024 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 23 20 6365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAODONG MING ET AL: "Real-Time Flood Forecasting Based on a High-Performance 2-D Hydrodynamic Model and Numerical Weather Predictions", WATER RESOURCES RESEARCH, AMERICAN GEOPHYSICAL UNION, US, vol. 56, no. 7, 8 July 2020 (2020-07-08), page n/a, XP071344483, ISSN: 0043-1397, DOI: 10.1029/2019WR025583 * page 14 * ----- | 1-15 | |

TECHNICAL FIELDS
SEARCHED     (IPC)

The present search report has been drawn up for all claims

| Place of search | Date of completion of the search | Examiner |
|---|---|---|
| The Hague | 28 March 2024 | Rocca, Simone |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 6365

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2024

| Patent document cited in search report | Publication date | Patent family member(s) | Publication date |
|---|---|---|---|
| JP 4323565 B1 | 02-09-2009 | JP 4323565 B1<br>JP 2010237732 A | 02-09-2009<br>21-10-2010 |

EPO FORM P0459

For more details about this annex : see Official Journal of the European Patent Office, No. 12/82